# EUROPÄISCHE PATENTSCHRIFT

(11) **EP 2 583 767 B1**
(45) Veröffentlichungstag und Bekanntmachung des Hinweises auf die Patenterteilung: **11.12.2019**
(21) Anmeldenummer: 12187976.1
(22) Anmeldetag: 10.10.2012
(51) Int. Cl.: B21D 22/02, B21D 28/06, B21D 53/64, B23D 61/12, B23D 65/02

(54) **Verfahren zum Herstellen von Sägeblättern durch Stanzen**
Method for producing saw blades by stamping
Procédé de fabrication de lames de scie par estampillage

(30) Priorität: 20.10.2011 DE 102011054648
(43) Veröffentlichungstag der Anmeldung: 24.04.2013
(73) Patentinhaber: MPS Sägen GmbH, 54332 Wasserliesch (DE)
(72) Erfinder:
(74) Vertreter: Grundmann, Dirk

(56) Entgegenhaltungen:
- EP-A2- 1 325 791
- DE-A1- 4 302 653
- DE-A1-102006 031 590
- GB-A- 404 509
- GB-A- 1 573 063

## Beschreibung

Die Erfindung betrifft ein Verfahren zum Herstellen eines Stich- oder Säbelsägeblattes, bei dem als Rohmaterial ein flacher, gehärteter und gerichteter Metallstreifen verwendet wird, aus dem das Sägeblatt herausgearbeitet wird.

Ein gattungsgemäßes Verfahren wird in der DE 10 2006 031590 A1 beschrieben. Wie beim erfindungsgemäßen Verfahren wird dort als Rohmaterial als Flachmaterial ein gehärteter und gerichteter Streifen verwendet. Aus diesem gehärteten und gerichteten Stahlstreifen wird ein Sägeblatt herausgearbeitet. Der Streifen wird von einem Coil abgerollt. Dieses Endlosmaterial wird standardisiert vorgefertigt. Der Streifen ist unter Spannung auf dem Coil aufgewickelt. Dieser Streifen wird einer Bearbeitungsvorrichtung zugeführt. Beim Stand der Technik wird das Sägeblatt mit Hilfe eines Laserstrahls aus dem Stahlstreifen herausgeschnitten.

Die DE 4302653 A1, EP 1325791 und GB 404,509 beschreiben Verfahren zum Herstellen eines Stich- oder Säbelsägeblattes, bei dem die Sägeblätter aus einem Metallstreifen herausgestanzt werden.

Die GB 1573063 beschreibt ein Verfahren zur Fertigung eines Kreissägeblattes. Bei diesem Verfahren wird ein Metallstreifen als Rohling verwendet. In ersten Bearbeitungsstufen werden in mehreren aufeinander folgenden Stanzschritten, die an unterschiedlichen Stationen vorgenommen werden, die Sägezähne freigestanzt. Erst in einem letzten Bearbeitungsschritt wird das Sägeblatt vollständig aus dem Metallstreifen herausgearbeitet.

Der Erfindung liegt die Aufgabe zugrunde, ein ökonomisches Verfahren zum Herstellen eines Stich- oder Säbelsägeblattes anzugeben.

Gelöst wird die Aufgabe durch die im Anspruch 1 angegebene Erfindung. Zunächst und im Wesentlichen ist vorgesehen, dass das Sägeblatt durch Stanzen aus dem Streifen herausgearbeitet wird. Erfindungsgemäß erfolgt dies in mehreren aufeinanderfolgenden Bearbeitungsschritten, wobei die einzelnen Bearbeitungsschritte zu Bearbeitungsstufen zusammengefasst sind. Die verwendeten Stanzwerkzeuge sind einer gemeinschaftlichen Stanze zugeordnet, welche mit einer Hubeinrichtung versehen ist, die einen Pressstempel getaktet auf und nieder bewegt, wobei der Pressstempel sämtliche Stanzstempel trägt, so dass durch lediglichen Vorschub des Streifens durch das Presswerkzeug das Sägeblatt getaktet in mehreren Stanzhüben gefertigt werden kann. Es ist vorgesehen, dass in einer ersten Bearbeitungsstufe in den Streifen die Sägezähne freigestanzt werden. Dies erfolgt bevorzugt in mehreren Bearbeitungsschritten, wobei diesen Bearbeitungsschritten ein Bearbeitungsschritt vorgeordnet ist, bei dem Fanglöcher in den Streifen eingestanzt werden, die für einen präzisen Vorschub verwendet werden. Beim Stanzen der Sägezähne werden Stanzlöcher in den Streifen hineingestanzt. Dabei werden in einem oder in mehreren Stanzhüben zunächst nur die Hälfte aller Zähne gestanzt. Dies kann bspw. dadurch erfolgen, dass in einem Bearbeitungsschritt jeder vierte Zahn, in einem weiteren Bearbeitungsschritt jeder dazwischenliegende vierte Zahn und in einem weiteren Bearbeitungsschritt wiederum jeder dazwischenliegende Zahn gestanzt wird. Nach dem Freistanzen der Zähne sind diese noch fest mit dem Streifen verbunden und ragen in eine ringsum begrenzte Stanzöffnung hinein. In einer zweiten Bearbeitungsstufe werden nachfolgend die Sägezähne geschränkt. Dabei werden die Sägezähne entlang von Biegelinien wechselseitig aus der Erstreckungsebene des Streifens ausgebogen. Die Biegelinien können miteinander fluchten. Sie verlaufen bevorzugt in Erstreckungsrichtung des Sägeblatts und ferner bevorzugt etwa durch die Tiefstpunkte der Zahnlücken. In einer dritten Bearbeitungsstufe, in der auch die Angel geformt wird, wird das Sägeblatt vollständig aus dem Streifen herausgestanzt. Beim Stanzen der Sägezähne formt der Stanzstempel eine der materialspezifischen und werkzeugspezifischen Kanteneinzugsbreite bzw. -höhe entsprechende Rundung im Bereich der Schnittkante. An die Rundung schließt sich auf der Schnittfläche eine glatte Schnittzone an, die in eine Bruchzone übergeht, die in der der Schnittkante gegenüberliegenden Bruchkante endet. Der dort verbleibende Schnittgrat kann sich förderlich auf die Zerspan-Leistung des Werkzeugs auswirken.

Die Erfindung wird nachfolgend anhand beigefügter Zeichnungen im Detail erläutert. Es zeigen:
- Fig. 1: schematisch einen Rohling, bei dem von links nach rechts insgesamt sieben Bearbeitungsstufen S₁ bis S₇ dargestellt sind, wobei Schraffiert die im jeweiligen Bearbeitungsschritt ausgestanzten Flächen gekennzeichnet sind;

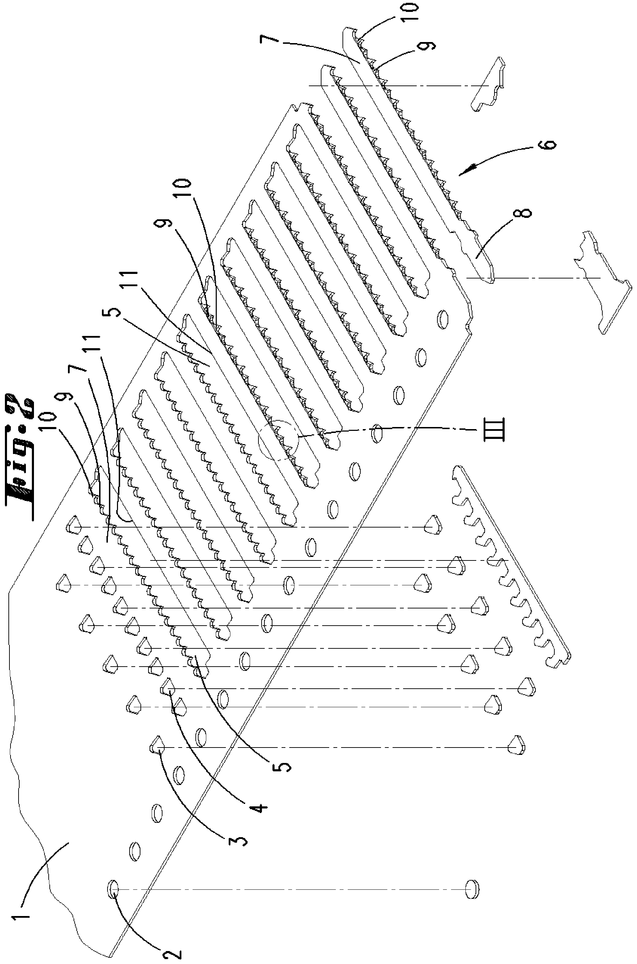

- Fig. 2: eine perspektivische Darstellung des in der Fig. 1 dargestellten Streifens mit dem in jedem Stanzschritt erzeugten Ausschnitten;
- Fig. 3: den Ausschnitt III-III in Fig. 2, wobei Schnittzone 15 und Bruchzone 16 angedeutet sind;
- Fig. 4: eine perspektivische Darstellung des Sägeblattes;
- Fig. 5: den Ausschnitt V in Fig. 4 und
- Fig. 6: den Schnitt gemäß der Linie VI-VI in Fig. 3.

Ausgangsmaterial für das Verfahren ist ein endloses Flachmaterial in Form eines gehärteten und gerichteten Stahlstreifens, der von einem Coil entnommen werden kann. Dieses Endlosmaterial wird standardisiert vorgefertigt. Der gerichtete Streifen läuft in eine nicht dargestellte Presse ein, die ein Presswerkzeug mit einer Vielzahl von Stanzstempeln aufweist. Die Stanzstempel werden von einer Hubeinrichtung getaktet gleichzeitig in den Streifen 1 aus gerichtetem und gehärtetem Metall eingebracht, das auf einer Matrize aufliegt. Dabei korrespondiert jeder Stanzstempel mit einem Bearbeitungsschritt S₁,...,S₇.

Zwischen den einzelnen getakteten Stanzhüben wird der Streifen 1 von einer nicht dargestellten Vorschubeinrichtung jeweils um denselben Streckenbetrag vorgeschoben.

In einem ersten Bearbeitungsschritt S₁ wird ein Fangloch 2 in den Streifen 1 eingestanzt, in das die Vorschubeinrichtung eingreift, um den Streifen 1 präzise bei jedem Takt um die Abstandsstrecke zweier Fanglöcher 2 vorzuschieben.

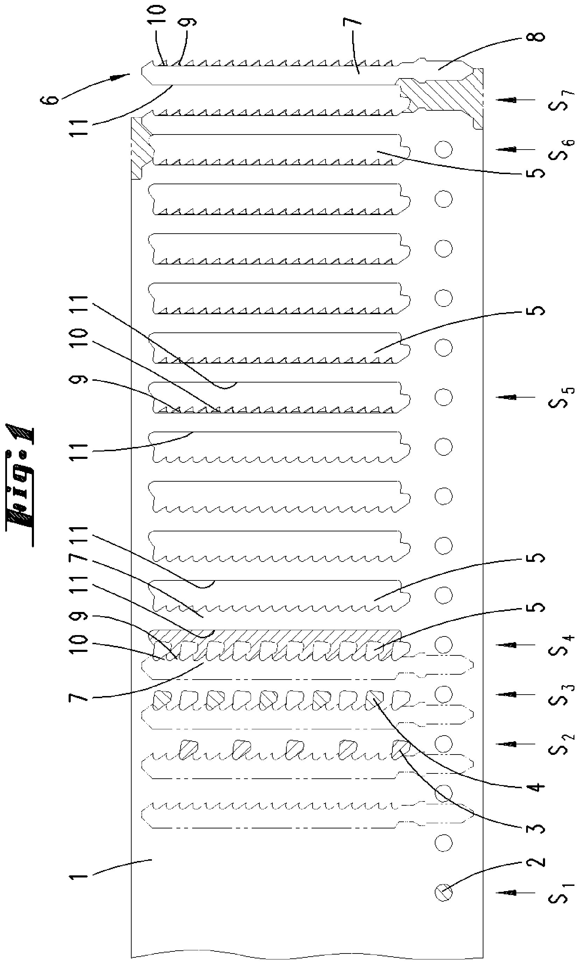

In einem zweiten Bearbeitungsschritt S₂ werden insgesamt fünf Ausschnitte aus dem Streifen 1 herausgestanzt, wobei jeder Ausschnitt ein Stanzloch 3 hinterlässt, das einen Randabschnitt hat, der einem Sägezahn entspricht. Zwischen den im zweiten Bearbeitungsschritt S₂ ausgestanzten Sägezähnen befinden sich insgesamt drei nicht ausgestanzte Sägezähne, so dass im zweiten Bearbeitungsschritt S₂ jeweils jeder vierte Sägezahn freigestanzt wird. Zur Verdeutlichung ist strichdoppelpunktiert die Umrisskontur des Sägeblattes in der Fig. 1 dargestellt.

In einem dritten Bearbeitungsschritt S₃ werden dann weitere jeweils vierte Sägezähne freigestanzt, wobei auch hier die Ausschnitte Stanzlöcher 4 belassen, die jeweils zu einem Sägezahn korrespondieren. Nach dem dritten Bearbeitungsschritt S₃ ist jeder zweite Sägezahn 9 freigeschnitten.

In einem darauf folgenden vierten Bearbeitungsschritt S₄ werden sämtliche dazwischenliegenden Sägezähne 10 ausgestanzt, wobei ein einziges Stanzloch 5 verbleibt. Der beim vierten Bearbeitungsschritt S₄ erzeugte Ausschnitt besitzt eine Kammform.

Mit den einzelnen, voneinander getrennten Stanzlöchern 3, 4 werden die Zahnlücken zwischen Zahnbrust jedes ungeraden und Zahnrücken jedes geraden Zahnes freigestanzt. Die verbleibenden Zahnlücken zwischen der Brust jedes geraden Zahnes und Rücken jedes ungeraden Zahnes werden in einem nachfolgenden Bearbeitungsschritt S₄ vorgenommen.

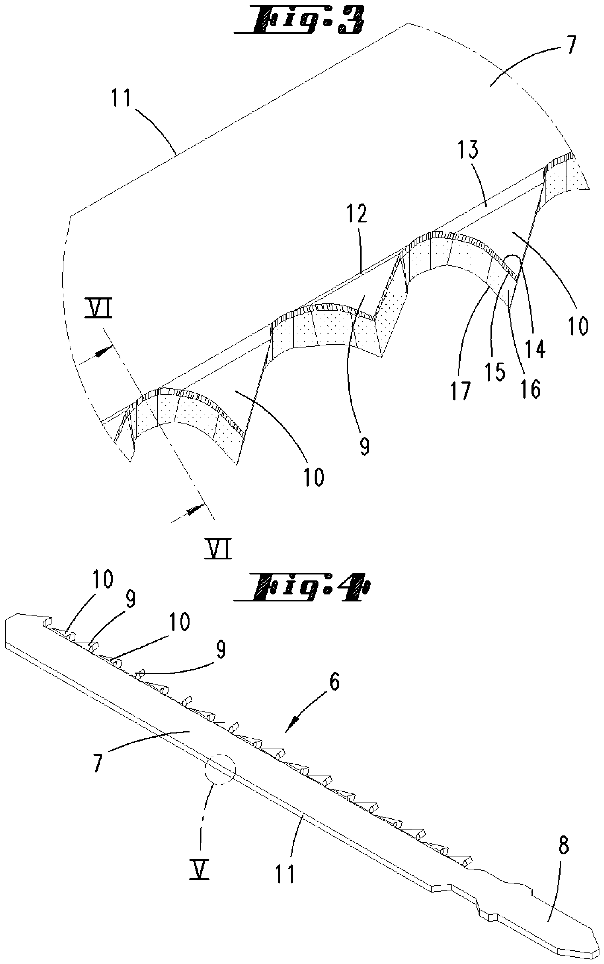

Nach weiteren vier Vorschubschritten wird in einem fünften Bearbeitungsschritt S₅ die Schränkung der Sägezähne 9, 10 vorgenommen. Dabei werden die Sägezähne 9, also jeder zweite Sägezahn, in die eine Richtung quer zur Erstreckungsrichtung des Sägeblattes 6 und die anderen Zähne 10 jeweils in die andere Richtung quer zur Erstreckungsrichtung des Sägeblattes 6 ausgebogen. Dies erfolgt mit Biegewerkzeugen, so dass die in der Fig. 3 sichtbaren Biegelinien 12, 13 entstehen, die miteinander fluchten.

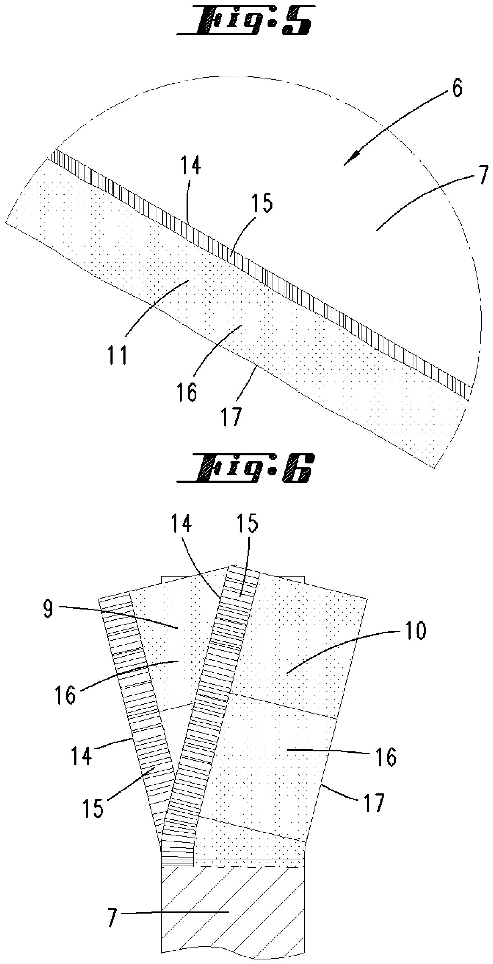

Aus den Fig. 3, 5 und 6 ist darüber hinaus ersichtlich, dass beim Stanzprozess als Folge des Kanteneinzugs eine (in den Figuren nicht erkennbare) gerundete Schnittkante 14 entsteht, an den sich ein Glattschnittbereich 15 anschließt. Dieser geht in eine Bruchzone 18 über, die in einer Bruchkante 17 endet, an der ein (in den Figuren nicht dargestellter) Schnittgrat verbleibt.

Nach dem Schränken wird nach weiteren vier Vorschubschritten in einem sechsten Bearbeitungsschritt S₆ die Spitze des Sägeblattes 6 freigeschnitten. Hierzu wird das Stanzloch 5 einseitig geöffnet.

In einem sich daran anschließenden siebten Bearbeitungsschritt S₇ wird die Angel 8 freigeschnitten. Während dieses letzten Stanzschrittes S₇ wird auch das Sägeblatt 6 vollständig vom Streifen 1 entfernt.

### Bezugszeichenliste:

- 1: gehärtetes gerichtetes Blech
- 2: Fangloch
- 3: Zahnstanzloch
- 4: Zahnstanzloch
- 5: Zahnstanzloch
- 6: Sägeblatt
- 7: Schaft
- 8: Angel
- 9: Sägezahn
- 10: Sägezahn
- 11: Rücken
- 12: Biegelinie
- 13: Biegelinie
- 14: Schnittkante
- 15: Schnittzone
- 16: Bruchzone
- 17: Bruchzone

- S₁ - S₇: Bearbeitungsschritte

## Patentansprüche

1. Verfahren zum Herstellen eines Stich- oder Säbelsägeblattes (6), bei dem als Rohling ein flacher, gehärteter und gerichteter Metallstreifen (1) verwendet wird, aus dem das Sägeblatt (6) in mehreren aufeinander folgenden Bearbeitungsstufen herausgestanzt wird, wobei in einer ersten Bearbeitungsstufe (S₂, S₃, S₄) in dem Metallstreifen (1) die Sägezähne (9, 10) freigestanzt werden und in einer späteren Bearbeitungsstufe (S₆, S₇) das Sägeblatt (6) vollständig aus dem Metallstreifen herausgestanzt wird, wobei die Bearbeitung mit einem Presswerkzeug erfolgt, bei dem die jeder Bearbeitungsstufe (S₁ bis S₇) zugeordneten Stanzstempel gleichzeitig mit einem Vorschub synchronisiert getaktet in den Metallstreifen eingreifen.

2. Verfahren nach Anspruch 1, **dadurch gekennzeichnet, dass** in einer zweiten Bearbeitungsstufe (S₅) die noch fest mit dem Metallstreifen (1) verbundenen Sägezähne (9, 10) geschränkt werden.

3. Verfahren nach einem der vorhergehenden Ansprüche, **dadurch gekennzeichnet, dass** in einer dritten Bearbeitungsstufe (S₆, S₇) die Angel (8) gestanzt wird.

4. Verfahren nach einem der vorhergehenden Ansprüche, **dadurch gekennzeichnet, dass** die erste Bearbeitungsstufe (S₂, S₃, S₄) zwei Bearbeitungsschritte umfasst, wobei in einem Bearbeitungsschritt (S₂, S₃) jeweils nur jeder zweite Zahn (9) aus dem Vollmaterial des Streifens (1) gestanzt wird und in dem weiteren Bearbeitungsschritt (S₄) die dazwischenliegenden Zähne (10) aus dem Vollmaterial ausgestanzt werden.

5. Verfahren nach einem der vorhergehenden Ansprüche, **dadurch gekennzeichnet, dass** beim Ausstanzen der Zähne (S₂, S₃, S₄) jeweils ringsum geschlossene Stanzlöcher (3, 4, 5) verbleiben.

6. Verfahren nach einem der vorhergehenden Ansprüche, **dadurch gekennzeichnet, dass** in der zweiten Bearbeitungsstufe (S₅) die Sägezähne (9, 10) entlang von insbesondere miteinander fluchtenden Biegelinien (12, 13) wechselseitig aus der Erstreckungsebene des Streifens (1) ausgebogen werden.

## Claims

1. Method for producing a jigsaw blade or sabre saw blade (6), in which a flat, hardened and straightened metal strip (1) is used as a blank, from which the saw blade (6) is punched out in a plurality of successive machining stages, wherein, in a first machining stage (S₂, S₃, S₄), the saw teeth (9, 10) are punched free in the metal strip (1) and, in a later machining stage (S₆, S₇), the saw blade (6) is completely punched out of the metal strip, wherein the machining is carried out using a pressing tool, which involves the punching stamps associated with each machining stage (S₁ to S₇) engaging in the metal strip simultaneously with a feed action in a synchronised and clocked manner.

2. Method according to claim 1, **characterised in that**, in a second machining stage (S₅), the saw teeth (9, 10), which are still rigidly connected to the metal strip (1), are straight-set.

3. Method according to any of the preceding claims, **characterised in that**, in a third machining stage (S₆, S₇), the tang (8) is punched.

4. Method according to any of the preceding claims, **characterised in that** the first machining stage (S₂, S₃, S₄) comprises two machining steps, with only every second tooth (9) being punched out of the solid material of the strip (1) in a machining step (S₂, S₃), and the teeth (10) positioned therebetween being punched out of the solid material in the subsequent machining step (S₄).

5. Method according to any of the preceding claims, **characterised in that**, when the teeth (S₂, S₃, S₄) are being punched out, punched holes (3,4,5) which are closed all-around are left over in each case.

6. Method according to any of the preceding claims, **characterised in that**, in the second machining stage (S₅), the saw teeth (9, 10) are alternately bent from the extension plane of the strip (1) along bending lines (12, 13) which are in particular aligned with each other.

## Revendications

1. Procédé de fabrication d'une lame de scie sauteuse ou de scie alternative (6), dans lequel on utilise comme matière première une bande métallique plate, durcie et redressée (1), à partir de laquelle la lame de scie (6) est découpée à la presse en plusieurs étapes successives de traitement, dans lequel, dans une première étape de traitement (S₂, S₃, S₄), les dents de scie (9, 10) sont libérées par découpe à la presse de la bande métallique (1) et, dans une étape ultérieure de traitement (S₆, S₇), la lame de scie (6) est entièrement extraite par découpe à la presse de la bande métallique, le traitement étant réalisé avec un outil de presse, dans lequel les poinçons de découpe affectés à chaque étape de traitement (S₁ à S₇) s'engagent simultanément de manière synchronisée avec une avance dans la bande métallique.

2. Procédé selon la revendication 1, **caractérisé en ce que**, dans une deuxième étape de traitement (S₅), les dents de scie (9, 10) qui sont encore solidaires de la bande métallique (1) sont avoyées.

3. Procédé selon l'une des revendications précédentes, **caractérisé en ce que**, dans une troisième étape de traitement (S₆, S₇), le tenon (8) est découpé à la presse.

4. Procédé selon l'une des revendications précédentes, **caractérisé en ce que** la première étape de traitement (S₂, S₃, S₄) comprend deux étapes de traitement, dans lesquelles dans une étape de traitement (S₂, S₃), seule une dent sur deux (9) est découpée à la presse dans le matériau solide de la bande métallique (1) et dans l'étape suivante (S₄) les dents intermédiaires (10) sont découpées à la presse du matériau solide.

5. Procédé selon l'une des revendications précédentes, **caractérisé en ce que**, lors de la découpe à la presse des dents (S₂, S₃, S₄), il reste des trous de découpe fermés (3, 4, 5).

6. Procédé selon l'une des revendications précédentes, **caractérisé en ce que**, dans la deuxième étape de traitement (S₅), les dents de scie (9, 10) sont alternativement pliées hors du plan d'extension de la bande (1), le long de lignes de pliage (12, 13) en particulier alignées entre elles.
